# EUROPÄISCHE PATENTSCHRIFT

(11) **EP 1 229 273 B1**
(45) Veröffentlichungstag und Bekanntmachung des Hinweises auf die Patenterteilung: **25.03.2009**
(21) Anmeldenummer: 02100059.1
(22) Anmeldetag: 28.01.2002
(51) Int. Cl.: F16H 61/00

(54) **Verfahren zur elektro-hydraulischen Steuerung eines Kraftfahrzeuggetriebes und elektro-hydraulische Steuerung für ein Kraftfahrzeuggetriebe**
Method and device for electro-hydraulically controlling a vehicle transmission
Méthode et dispositif pour commande électro-hydraulique d'une transmission automatique

(30) Priorität: 02.02.2001 DE 10104706
(43) Veröffentlichungstag der Anmeldung: 07.08.2002
(73) Patentinhaber: Continental Automotive GmbH, 30165 Hannover (DE)
(72) Erfinder: Last, Bernd, Dr., 93093, Donaustauf (DE)

(56) Entgegenhaltungen:
- EP-A2- 0 825 366
- WO-A-99/21279
- DE-A1- 19 802 999

## Beschreibung

Die Erfindung betrifft ein Verfahren zur elektro-hydraulischen Steuerung eines Kraftfahrzeuggetriebes und eine elektro-hydraulische Steuerung für ein Kraftfahrzeuggetriebe.

Bei automatischen oder automatisierten Getrieben für Kraftfahrzeuge werden neben herkömmlichen rein hydraulischen Steuerungen zunehmend auch kombinierte Elektronik-Hydraulik-Systeme - im folgenden als elektro-hydraulische Steuerungen bezeichnet - eingesetzt. Dabei verbleibt der Hydraulik die Leistungsansteuerung der Getriebestellglieder - Kupplungen und Bremsen -, während die Gang- oder Übersetzungswahl und die Anpassung der Drücke an das zu übertragende Moment von der Elektronik übernommen werden. Die Schnittstelle zwischen Elektronik und Hydraulik bilden üblicherweise elektrohydraulische Wandler, wie elektrisch angesteuerte proportionale Druckregelventile oder Servoventile, die einen eingeprägten Steuerstrom in einen dazu proportionalen Betätigungsdruck für ein zugeordnetes Getriebestellglied wandeln. Um den für ein gefordertes Drehmoment notwendigen Betätigungsdruck mit ausreichender Genauigkeit einzustellen, ist eine Rückführung des aus dem elektrisch angesteuerten Druckregelventil ausgehenden Druckes oder des in das elektrisch angesteuerte Druckventil eingeprägten Steuerstromes notwendig. Auf diese Weise wird ein geschlossener Regelkreis realisiert. Dabei werden insbesondere im niedrigen Druck- oder Momentenbereich hohe Anforderungen an die Auflösung des rückgeführten Betätigungsdruckes oder Steuerstromes gestellt.

Bei Rückführung des Steuerstroms des elektrisch angesteuerten Druckregelventils ist nur durch Verwendung von aufwendiger und hochwertiger, somit aber auch teurer Elektronik eine Strommessung möglich, bei der die Ergebnisse in einem engen Toleranzbereich liegen, der die geforderten Auflösungen und Genauigkeiten zulässt. Eine Rückführung des Betätigungsdruckes des Druckregelventils mit der geforderte Genauigkeit ist nur durch Verwendung hochwertiger und damit teurer Drucksensoren in Verbindung mit einer entsprechend aufwendigen Auswerteelektronik sicher zu stellen.

Eine weitere Möglichkeit, die erforderliche Auflösung zu erreichen, ergibt sich durch Verwendung elektrisch angesteuerter Druckregelventile in sogenannter "Dual Gain" - Ausführung. Derartige "Dual Gain"-Druckregelventile besitzen zwei elektromechanische Wandler pro Ventil und die erforderliche Auflösung kann durch zwei oder mehr geregelte Treiberstufen erreicht werden. Auch eine derartige Lösung ist aber mit hohem Kostenaufwand verbunden.

Aus der WO 99/21279 A1 ist eine Schaltungsanordnung zum Regeln des Stroms für ein Hydraulikdruck-Regelventil eines Kraftfahrzeuggetriebes bekannt. Bei dieser wird einem Hydraulikventil von einem Stromregler ein Steuerstrom zugeführt, der zwischen einem Steuergerät und dem Hydraulikventil angeordnet ist. Der dem Hydraulikventil zugeführte Strom wird über einen als Shunt oder Nebenwiderstand geschalteten Strommesswiderstand in eine Spannung umgesetzt, die dem Steuergerät zugeführt und dort zur Stromregelung verwendet wird. Zur Überwachung des Betriebszustands des Getriebes ist ferner ein Drucksensor vorgesehen.

Ferner ist aus der DE 198 02 999 A1 ein Linearelektromagneten-Regelungsverfahren und eine Vorrichtung offenbart, bei der ein durch einen Linearelektromagneten fließender Strom erfasst und auf eine Regelungseinrichtung zur Durchführung einer Regelung zurückgeführt wird, so dass der erfasste Strom gleich einem Sollstromwert ist. Darüber hinaus umfasst die Vorrichtung zur Ermittlung des Sollstroms einen Kupplungsflüssigkeitsdruck-Berechnungsabschnitt zur Berechnung eines Kupplungsflüssigkeitsdrucks sowie einen Flüssigkeitsdruck-Stromwandler zur Umwandlung des Flüssigkeitsdrucks in den Sollstrom.

Der Erfindung liegt daher die Aufgabe zugrunde, ein Verfahren zur elektro-hydraulischen Steuerung eines Kraftfahrzeuggetriebes zu schaffen, bei dem mit geringem Aufwand und mit geringen Kosten eine exakte Regelung des Betätigungsdruckes der Getriebestellglieder und damit der einzustellenden Momente gewährleistet ist. Es ist ferner Aufgabe der Erfindung eine Steuerung anzugeben, welche zur Durchführung des Verfahrens ausgebildet ist.

Diese Aufgabe wird durch ein Verfahren mit den Merkmalen des Patentanspruchs 1 bzw. eine Steuerung mit den Merkmalen des Patentanspruchs 4 gelöst. Vorteilhafte Weiterbildungen der Erfindung sind in den Unteransprüchen niedergelegt.

Durch ein Druckregelventil wird ein Steuerstrom in einen Betätigungsdruck für ein Getriebestellglied, zum Beispiel eine Kupplung oder eine Bremse, umgesetzt. Erfindungsgemäß wird sowohl der aktuelle Steuerstrom über eine Strommesseinrichtung als auch der aktuelle Betätigungsdruck über einen Drucksensor auf einen Regler rückgeführt. Durch den Regler wird ein Sollwert für den Betätigungsdruck des Getriebestellglieds, der ein vom Stellglied zu übertragendes Moment - im folgenden als Stellgliedmoment bezeichnet - charakterisiert, abhängig von dem rückgeführten Steuerstrom und/oder von dem rückgeführten Betätigungsdruck in den Steuerstrom umgesetzt. Die Strommesseinrichtung ist dabei so abgestimmt, dass in einem Teilbereich des Stellgliedmoments eine hohe Auflösung der Messergebnisse erreicht wird. In diesem Teilbereich wird der Sollwert für den Betätigungsdruck abhängig von dem rückgeführten Steuerstrom in den Steuerstrom für das Druckregelventil umgesetzt. Bei linearer Abstimmung der Strommesseinrichtung werden außerhalb dieses Teilbereichs aber keine vernünftigen Messergebnisse mehr geliefert. Somit ist es entscheidend rechtzeitig vor Erreichen der Teilbereichsgrenzen auf eine vom rückgeführten Betätigungsdruck abhängige Umsetzung des Solldrucks umzuschalten. Hierzu wird durch den Regler vorteilhaft eine das zu übertragende Stellgliedmoment charakterisierende Größe ausgewertet und bei Überschreiten oder Unterschreiten von vorgegebenen Schwellwerten wird von der Steuerstrom abhängigen Umsetzung des Solldrucks auf die vom Betätigungsdruck abhängige Umsetzung umgeschaltet. Die Realisierungsmöglichkeiten für den nötigen Schwellwertvergleich sind dabei sehr vielfältig. So kann sowohl der zurückgeführte Steuerstrom als auch der zurückgeführte Betätigungsdruck als Referenzgröße dienen.

Besonders vorteilhaft ist dabei, dass die erfindungsgemäße Steuerung lediglich eine herkömmliche Strommesseinrichtung und einen herkömmlichen Drucksensor benötigt. Bei beiden Komponenten werden keine besonderen Anforderungen an die Auflösung über einen breiten Messbereich gestellt, so dass kostengünstige Standardsysteme verwendet werden können. Der verwendete Drucksensor kann vorteilhaft auch zu Überwachungszwecken genutzt werden.

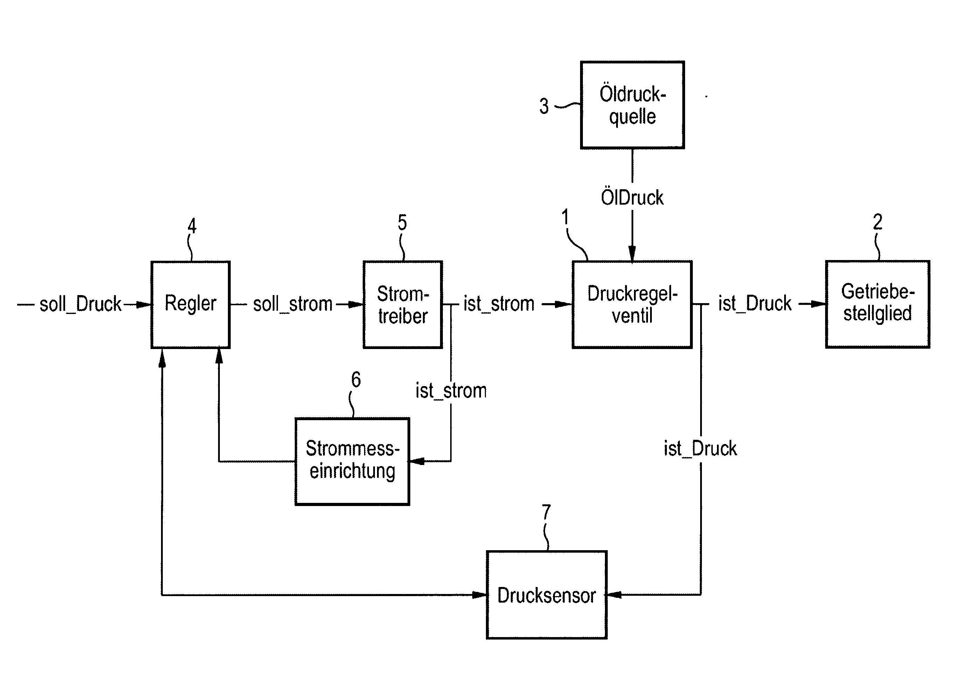

Ein Ausführungsbeispiel der Erfindung ist im folgenden anhand der Figur erläutert. Die Figur zeigt dabei ein Blockschaltbild einer erfindungsgemäßen elektro-hydraulischen Steuerung für ein Kraftfahrzeuggetriebe.

Ein elektrisch angesteuertes proportionales Druckregelventil 1 wandelt einen eingeprägten Steuerstrom (ist_Strom) in einen dazu proportionalen Betätigungsdruck (ist_Druck) für ein Getriebestellglied 2, zum Beispiel eine Kupplung oder eine Bremse. Das elektrisch angesteuerte Druckregelventil 1 ist hierzu mit einer Öldruckquelle 3, zum Beispiel einer Pumpe, verbunden. Im Kraftfahrzeugbereich ist Öl das am häufigsten verwendete Druckmedium, die Erfindung ist aber keineswegs auf dieses Druckmedium eingeschränkt.

Einem Regler 4 wird ein Sollwert des Betätigungsdrucks (soll_Druck) von einer nicht dargestellten übergeordneten Steuereinrichtung, zum Beispiel einer Getriebesteuerung, zugeführt und in einen Steuerstrom-Sollwert (soll_Strom) umgesetzt. Durch einen Stromtreiber 5 wird dieser Steuerstrom-Sollwert (soll_Strom) auf den für das elektrisch angesteuerte Druckregelventil 1 nötigen Steuerstromwert (ist_Strom) verstärkt. Der Stromtreiber 5 kann aber auch in den Regler 4 integriert sein. Über eine Strommesseinrichtung 6, zum Beispiel mit Hilfe eines Shunt-Widerstands, wird der aktuelle Steuerstrom (ist_Strom) des Druckregelventils 1 auf den Regler 4 zurückgeführt. Ebenso wird der aktuelle Betätigungsdruck (ist_Druck) des Getriebestellglieds 2 über einen Drucksensor 7 auf den Regler 4 zurückgeführt. Auf diese Weise ergibt sich ein geschlossener Regelkreis mit zwei parallelen Rückführkreisen.

Die Strommesseinrichtung 6 wird dabei derart abgestimmt, dass in niedrigen Momentenbereichen, zum Beispiel im Bereich bis zu 30 Nm, und entsprechend geringen Stromwerten, zum Beispiel bis 100 mA, eine hohe Auflösung der Messergebnisse zur Verfügung steht. Dies hat aber für eine lineare Abstimmung zur Folge, dass die Schaltung für höhere Strom- und Momentenbereiche in den Überlauf geht und somit an den Regler 4 keine sinnvollen Werte des Steuerstromes mehr zurückgemeldet werden.

Erfindungsgemäß wird in dem Teilbereich des Stellgliedmoments, in dem die Messergebnisse der Strommesseinrichtung 6 eine hohe Auflösung aufweisen, der Steuerstrom für das Druckregelventil 1 abhängig vom rückgeführten aktuellen Steuerstrom (ist_Strom) bestimmt. Außerhalb dieses Momentenbereichs wird der Steuerstrom für das Druckregelventil abhängig von dem über den Drucksensor 7 rückgeführten aktuellen Betätigungsdruck (ist_Druck) bestimmt.

Ein Abgleich der beiden Messbereiche im Regler 4 kann entweder durch eine im Regler 4 vorhandene Steuereinrichtung, zum Beispiel durch Adaptionen oder Ausgleichsalgorithmen in einem Mikrocontroller, oder über eine Kalibration bei der Inbetriebnahme des Systems erfolgen.

Für die Umschaltung wird durch den Regler 4 vorteilhaft eine das zu übertragende Stellgliedmoment charakterisierende Größe ausgewertet und bei Überschreiten eines vorgegebenen Schwellwerts von der Steuerstrom abhängigen Umsetzung des Solldrucks (soll_Druck) auf die vom Betätigungsdruck abhängige Umsetzung umgeschaltet. Die Realisierungsmöglichkeiten für den nötigen Schwellwertvergleich sind dabei sehr vielfältig. So kann sowohl der zurückgeführte Steuerstrom (ist_Strom) als auch der zurückgeführte Betätigungsdruck (ist_Druck) als Referenzgröße dienen. Da eine Abstimmung der Strommesseinrichtung 6 in der beschriebenen Form bei linearer Abstimmung aber zwangsläufig dazu führt, dass die Messeinrichtung im höheren Momentenbzw. Strombereich ihren Überlauf erreicht und somit keine vernünftigen Messergebnisse mehr liefert, ist es lediglich entscheidend rechtzeitig vor Erreichen dieses Überlaufbereichs auf die Betätigungsdruck abhängige Umsetzung des Solldrucks umzuschalten.

In einer alternativen Ausführungsform wird die Strommesseinrichtung 6 derart abgestimmt, dass in hohen Momentenbereichen, zum Beispiel im Bereich ab 30 Nm, und entsprechend hohen Stromwerten, zum Beispiel ab 100 mA, eine hohe Auflösung der Messergebnisse zur Verfügung steht. Dementsprechend wird der Steuerstrom im niedrigen Momentenbereich unterhalb eines vorgegebenen Schwellwerts abhängig von dem rückgeführten Betätigungsdruck (ist_Druck) und im hohen Momentenbereich oberhalb des vorgegebenen Schwellwerts abhängig vom rückgeführten Steuerstrom (ist_Strom) bestimmt.

In einer weiteren Ausführungsform wird der Steuerstrom zumindest in einem Teilbereich des zu übertragenden Stellgliedmoments abhängig von dem rückgeführten Steuerstrom (ist_Strom) und dem rückgeführten Betätigungsdruck (ist_Druck) bestimmt. Hierzu kann beispielsweise ein Zustandsbeobachter in Form eines Kalman-Filters eingesetzt werden, der eine parallele Verarbeitung beider Eingangsgrößen ermöglicht.

Die parallele Rückführung des Steuerstroms und des Betätigungsdrucks kann auch vorteilhaft bei Fehlfunktionen in einem der beiden Rückführkreise genutzt werden. Wird im Regler 4, zum Beispiel durch eine Plausibilitätsprüfung, beispielsweise ein Ausfall oder eine Fehlfunktion bei der Rückführung des Steuerstroms (ist_Strom) festgestellt, kann auch innerhalb des Teilbereichs in dem im Normalbetrieb der Solldruck (soll_Druck) abhängig vom rückgeführten Steuerstrom (ist_Strom) umgesetzt wird auf eine vom Betätigungsdruck (ist_Druck) abhängige Umsetzung des Solldrucks (soll_Druck) umgeschaltet werden. Auf diese Weise wird auf einfache Art und Weise eine zusätzliche Fehlersicherheit realisiert.

## Patentansprüche

1. Verfahren zur elektro-hydraulischen Steuerung eines Kraftfahrzeuggetriebes bei dem
- ein Steuerstrom (ist_Strom) durch ein Druckregelventil (1) in einen Betätigungsdruck (ist_Druck) für ein Getriebestellglied (2) umgesetzt wird,
- der aktuelle Steuerstrom (ist_Strom) und der aktuelle Betätigungsdruck (ist_Druck) auf einen Regler (4) rückgeführt werden und
- ein Sollwert für den Betätigungsdruck (soll_Druck) des Getriebestellglieds (2) durch den Regler (4) in den Steuerstrom (ist_Strom) umgesetzt wird, wobei die Umsetzung abhängig von dem aktuellen Steuerstrom (ist_Strom) oder von dem aktuellen Betätigungsdruck (ist_Druck) erfolgt,
**dadurch gekennzeichnet, dass**
die Umsetzung des Sollwerts für den Betätigungsdruck in den Steuerstrom (ist_Strom) in einem Teilbereich eines zu übertragenden Stellgliedmoments abhängig von dem aktuellen Steuerstrom (ist_Strom) ist und ansonsten abhängig von dem aktuellen Betätigungsdruck (ist_Druck) ist.

2. Verfahren nach Anspruch 1, **dadurch gekennzeichnet, dass** der Sollwert für den Betätigungsdruck des Getriebestellglieds durch den Regler (4) in den Steuerstrom (ist_Strom) umgesetzt wird abhängig von
- dem aktuellen Steuerstrom (ist_Strom), falls eine das zu übertragende Stellglied-Moment charakterisierende Größe unterhalb eines vorgegebenen Schwellwerts liegt und
- dem aktuellen Betätigungsdruck (ist_Druck), falls die das zu übertragende Stellglied-Moment charakterisierende Größe oberhalb des vorgegebenen Schwellwerts liegt.

3. Verfahren nach Anspruch 1, **dadurch gekennzeichnet, dass** der Sollwert für den Betätigungsdruck des Getriebestellglieds durch den Regler (4) in den Steuerstrom (ist_Strom) umgesetzt wird abhängig von
- dem aktuellen Steuerstrom (ist_Strom), falls eine das zu übertragende Stellglied-Moment charakterisierende Größe oberhalb eines vorgegebenen Schwellwerts liegt und
- dem aktuellen Betätigungsdruck (ist_Druck), falls die das zu übertragende Stellglied-Moment charakterisierende Größe unterhalb des vorgegebenen Schwellwerts liegt.

4. Elektro-hydraulische Steuerung für ein Kraftfahrzeuggetriebe, die aufweist
- ein Druckregelventil (1) zum Umsetzen eines Steuerstroms (ist_Strom) in einen Betätigungsdruck (ist_Druck) für ein Getriebestellglied (2),
- einen Regler (4) zum Umsetzen eines Sollwerts für den Betätigungsdruck (soll_Druck) in den Steuerstrom (ist_Strom) abhängig vom aktuellen Steuerstrom (ist_Strom) oder vom aktuellen Betätigungsdruck (ist_Druck), derart, dass die Umsetzung des Sollwerts für den Betätigungsdruck in den Steuerstrom (ist_Strom) in einem Teilbereich eines zu übertragenden Stellgliedmoments abhängig von dem aktuellen Steuerstrom (ist_Strom) ist und ansonsten abhängig von dem aktuellen Betätigungsdruck (ist_Druck) ist,
- eine Strommesseinrichtung (6) über die der aktuelle Steuerstrom (ist_Strom) auf den Regler (4) rückgeführt wird und
- einen Drucksensor (7) über den der aktuelle Betätigungsdruck (ist_Druck) auf den Regler (4) rückgeführt wird.

5. Steuerung nach Anspruch 4, **dadurch gekennzeichnet, dass** die Strommesseinrichtung derart abgestimmt ist, dass in einem Teilbereich des zu übertragenden Stellgliedmoments eine hohe Auflösung des Messergebnisses gewährleistet ist.

## Claims

1. Method for electro-hydraulically controlling a motor vehicle transmission, wherein:
- a control current (actual_current) is converted by means of a pressure regulating valve (1) into an actuating pressure (actual_pressure) for a transmission actuating element (2),
- the present control current (actual_current) and the present actuating pressure (actual_pressure) are fed back to a regulator (4) and
- a setpoint value for the actuating pressure (setpoint_pressure) of the transmission actuating element (2) is converted by the regulator (4) into the control current (actual_current), with the conversion being performed as a function of the present control current (actual_current) or the present actuating pressure (actual_pressure),
**characterised in that**
the conversion of the setpoint value for the actuating pressure into the control current (actual_current) in a partial range of an actuating element torque that is to be transmitted is dependent on the present control current (actual_current) and otherwise is dependent on the present actuating pressure (actual_pressure).

2. Method according to claim 1, **characterised in that** the setpoint value for the actuating pressure of the transmission actuating element is converted by the regulator (4) into the control current (actual_current) as a function of
- the present control current (actual_current) if the value of a variable characterising the actuating element torque that is to be transmitted is less than a predefined threshold value and
- the present actuating pressure (actual_pressure) if the value of the variable characterising the actuating element torque that is to be transmitted is greater than the predefined threshold value.

3. Method according to claim 1, **characterised in that** the setpoint value for the actuating pressure of the transmission actuating element is converted by the regulator (4) into the control current (actual_current) as a function of
- the present control current (actual_current) if the value of a variable characterising the actuating element torque that is to be transmitted is greater than a predefined threshold value and
- the present actuating pressure (actual_pressure) if the value of the variable characterising the actuating element torque that is to be transmitted is less than the predefined threshold value.

4. Electro-hydraulic controller for a motor vehicle transmission, comprising:
- a pressure regulating valve (1) for converting a control current (actual_current) into an actuating pressure (actual_pressure) for a transmission actuating element (2),
- a regulator (4) for converting a setpoint value for the actuating pressure (actual_pressure) into the control current (actual_current) as a function of the present control current (actual_current) or the present actuating pressure (actual_pressure) such that the conversion of the setpoint value for the actuating pressure into the control current (actual_current) in a partial range of an actuating element torque that is to be transmitted is dependent on the present control current (actual_current) and otherwise is dependent on the present actuating pressure (actual_pressure),
- a current measuring device (6) via which the present control current (actual_current) is fed back to the regulator (4) and
- a pressure sensor (7) via which the present actuating pressure (actual_pressure) is fed back to the regulator (4).

5. Controller according to claim 4, **characterised in that** the current measuring device is tuned in such a way that a high resolution of the measurement result is ensured in a partial range of the actuating element torque that is to be transmitted.

## Revendications

1. Procédé pour la commande électro-hydraulique d'une boîte de vitesses de véhicule automobile, dans lequel
- un courant de commande (ist_Strom) parcourant une soupape de régulation de pression (1) est converti en une pression d'actionnement (ist_Druck) pour un organe de réglage de boîte de vitesses (2),
- le courant de commande actuel (ist_Strom) et la pression d'actionnement actuelle (ist_Druck) sont renvoyés en retour à un régulateur (4) et
-- une valeur de consigne pour la pression d'actionnement (soll_Druck) de l'organe de réglage de boîte de vitesses (2) est convertie par le régulateur (4) en le courant de commande (ist_Strom), la conversion s'effectuant en fonction du courant de commande actuel (ist_Strom) ou en fonction de la pression d'actionnement actuelle (ist_Druck),
**caractérisé en ce que**
dans un intervalle partiel d'un couple d'organe de réglage à transmettre, la conversion de la valeur de consigne pour la pression d'actionnement en le courant de commande (ist_Strom) est fonction du courant de commande actuel (ist_Strom) et, autrement, elle est fonction de la pression d'actionnement actuelle (ist_Druck).

2. Procédé selon la revendication 1, **caractérisé en ce que** la valeur de consigne pour la pression d'actionnement de l'organe de réglage de boîte de vitesses est convertie par le régulateur (4) en le courant de commande (ist_Strom) en fonction
- du courant de commande actuel (ist_Strom), dans le cas où une grandeur qui caractérise le couple d'organe de réglage à transmettre est en-dessous d'une valeur de seuil prédéterminée et
-- de la pression d'actionnement actuelle (ist_Druck), dans le cas où la grandeur qui caractérise le couple d'organe de réglage à transmettre est au-dessus de la valeur de seuil prédéterminée.

3. Procédé selon la revendication 1, **caractérisé en ce que** la valeur de consigne pour la pression d'actionnement de l'organe de réglage de boîte de vitesses est convertie par le régulateur (4) en le courant de commande (ist_Strom) en fonction
du courant de commande actuel (ist_Strom) dans le cas où une grandeur qui caractérise le couple d'organe de réglage à transmettre est au-dessus d'une valeur de seuil prédéterminée et
de la pression d'actionnement actuelle (ist_Druck), dans le cas où la grandeur qui caractérise le couple d'organe de réglage à transmettre est en-dessous de la valeur de seuil prédéterminée.

4. Commande électro-hydraulique pour une boîte de vitesses de véhicule automobile, qui présente
- une soupape de régulation de pression (1) destinée à convertir un courant de commande (ist_Strom) en une pression d'actionnement (ist_Druck) pour un organe de réglage de boîte de vitesses (2),
- un régulateur (4) destiné à convertir une valeur de consigne pour la pression d'actionnement (soll_Druck) en le courant de commande (ist_Strom) en fonction du courant de commande actuel (ist_Strom) ou en fonction de la pression d'actionnement actuelle (ist_Druck), de telle sorte que, dans un intervalle partiel d'un couple d'organe de réglage à transmettre, la conversion de la valeur de consigne pour la pression d'actionnement en le courant de commande (ist_Strom) est fonction du courant de commande actuel (ist_Strom) et, autrement, elle est fonction de la pression d'actionnement actuelle (ist_Druck),
- un dispositif de mesure du courant (6) au moyen duquel le courant de commande actuel (ist_Strom) est renvoyé en retour au régulateur (4) et
- un capteur de pression (7) au moyen duquel la pression d'actionnement actuelle (ist_Druck) est renvoyée en retour au régulateur (4).

5. Commande selon la revendication 4, **caractérisée en ce que** le dispositif de mesure du courant est réglé de telle sorte qu'une haute résolution du résultat de mesure soit assurée dans un intervalle partiel du couple d'organe de réglage à transmettre,.
